# EUROPEAN PATENT SPECIFICATION

(11) **EP 0 365 565 B1**
(45) Date of publication and mention of the grant of the patent: **03.01.2001**
(21) Application number: 88905621.4
(22) Date of filing: 01.07.1988
(51) Int. Cl.: A01N 59/12

(54) **BIOCIDAL COMPOSITION**
BIOZIDE ZUSAMMENSETZUNG
COMPOSITION GERMICIDE

(30) Priority: 01.07.1987 AU 282087
(43) Date of publication of application: 02.05.1990
(73) Proprietor: NOVAPHARM RESEARCH PTY. LTD., Rosebery, NSW 2018 (AU)
(72) Inventor: GLUCK, Bruno, Anthony, Dee Why, NSW 2099 (AU)
(74) Representative: Gaunt, Robert John
(86) International application number: AU8800234
(87) International publication number: WO8900006

(56) References cited:
- EP-A- 0 006 548
- AU-B- 2 464 384
- AU-B- 3 491 878
- AU-B- 8 770 875
- CA-A- 1 050 382
- DE-A- 2 718 385
- US-A- 3 028 300
- US-A- 3 898 326
- US-A- 4 151 275
- US-A- 4 271 149
- US-A- 4 320 114
- No further relevant documents have been disclosed.
- H.-U. SCHENK, P. SIMAK & E. HAEDICKE: "Structure of polyvinylpyrrolidone-iodine.", J. PHARM. SCI., , December 1979, vol. 68, no. 12, pages 1505 to 1509

## Description

### TECHNICAL FIELD

The present invention relates to iodophor germicidal compositions and more particularly to the production of low cost iodophor germicidal compositions of improved stability by virtue of their unusually low PVP:I₂ ratios.

### BACKGROUND ART

There has been in the past a continuing effort to develop a germicidal composition which is stable and cheap to manufacture. The advantages of iodine condensed with a carrier, known as an iodophor and resulting in complex formation, over previously used iodine preparations such as Tincture of iodine and Lugol's solution are well documented.

The art is rich in attempts to efficiently produce an iodophor complex which is both cheap to prepare and stable over a period of time. It was previously believed that such compositions needed a high PVP:I₂ ratio for stability.

For example in US Patent 3 028 300 iodine and iodide are combined directly with polyvinylpyrrolidone, hereinafter known as PVP, in the dry state. US 3 028 300 teaches that the PVP to iodine ratio must be at least 3:1 and the iodide to iodine ratio greater than 0.5. The disadvantage with this process is that the stability of the complex form decreases with decreasing proportions of PVP as shown in the tables illustrating the invention. No complex can be formed when the PVP to iodine is less than 3:1.

The process of US Patent 4 113 857 also uses for the iodine complex formation, oxidation of an iodine containing substance by an oxidising medium but with the following significant important difference to the present invention, namely the use of an excess of oxidising agent such as hydrogen peroxide or potassium iodate which leaves the final product free of iodide, claimed to be an essential and integral part of the invention. In contrast the present invention requires at least 10% of iodide calculated on the iodine of the complex.

US Patent 4 320 114 discloses a PVP-iodine complex wherein the complex is formed by combining, eg KI, PVP, and hydrogen peroxide. The pH is adjusted to between 2 and 7. The iodine is formed in situ by adding an oxidizing agent for partially converting the iodide ions into free iodine.

German Patent 27 18 385 discloses a process for forming a PVP-iodine complex by incomplete oxidation of iodide 4) and a ratio of PVP:iodine of approximately 5:1.

Spanish Patents 545 377 and 86-08317 disclose PVP-iodine complexes formed with a 10% excess of KIO₃. Complete oxidation of the iodide would be expected. The ratio of PVP:iodine is 10:1.

United Kingdom Patent 2 084 875 discloses a composition in dry form, to be dissolved in water shortly before use. The iodophor is formed after dissolution in water. The ratios claimed are broad. The example discloses a 2:1 weight ratio for the PVP:KI, but no or little excess iodide would be expected as the iodide and the perborate are added in approximately equimolar amounts, based on the oxidizing strength of the perborate.

US Patents 3 898 326 and 4 017 407 provide iodine by direct addition.

US Patent 4 130 640 discloses a germicidal composition containing a sulfated fatty alcohol and/or a sulfosuccinates of a fatty alcohol in combination with PVP-iodine or iodine/iodide.

US Patent 4 402 937 requires that the ratio of iodine:iodide be about 2:1. The solution is stabilized with the addition of a reducing rather than an oxidizing agent which reduces iodine to iodide.

US Patent 4 526 751 discloses a weight ratio of about 2:1 for PVP:interhalogen solution and about 0.5:1 for iodide:iodine.

US Patent 4 038 476 discloses free-flowing granules of practically uniform composition and particle size consisting of PVP and iodide by combining with uniform thorough mixing a solution and/or colloidal suspension of a substance releasing iodide ions in a first solvent. The mixture as well as a solution and/or colloidal suspension and/or suspension of PVP in a second solvent or solvent mixture which possesses surface tension different from that of the first solvent or solvent mixture and in which PVP is at least partially soluble or wettable and in which the substance releasing iodide ions contained in the first solvent or solvent mixture is insoluble or only slightly soluble.

US Patent 4 125 602 is directed to the preparation of iodophor granules of practically uniform particle size consisting of PVP, iodine and a substance releasing iodide ions by combining with uniform thorough mixing a solution and/or colloidal suspension of elementary iodine and a substance releasing iodide ions in a first solvent or solvent mixture as well as a solution and/or colloidal solution and/or suspension of PVP in a second solvent or solvent mixture which has a surface tension different from that of the first solvent or solvent mixture and in which PVP is at least partially soluble or wettable and in which the substance is dissolved or suspended in the first solvent or solvent mixture are insoluble or only slightly soluble and separating and drying the granules formed.

### DISCLOSURE OF THE INVENTION

According to this invention there is provided an organic iodophor composition of improved stability in aqueous solution comprising a polyvinylpyrrolidone:iodine (PVP:I) complex as an iodophor and hydroiodic acid or an alkali metal iodide; wherein the ratio of PVP to iodine is from 1.75:1 to 3:1 by weight; and wherein the complex obtainable by oxidising the iodide in the presence of PVP has a pH value of less than 7; and wherein the hydroiodic acid or alkali metal iodide is present in an amount of between 10 and 60% by weight of the PVP:I iodophor complex. The most preferred form of PVP is PVP K30. Hydroiodic acid and alkali metal iodides, preferably potassium iodide, are iodine liberating substances.

The iodophor may be formed through liberation of iodine from the iodine liberating substance by an oxidising agent in the presence of PVP. The iodophor, thus obtained, shows improved stability when the proportion of iodine to the organic iodine complex forming substance is increased, contrary to what could be expected from the PVP:I complex prepared as described in the previous art.

For example a PVP-iodine complex where the proportion of PVP to iodine is 1.75:1 is significantly more stable than the complex where the proportion is 7:1. The latter proportion is the accepted value in commercially available PVP-iodine products.

Examples of suitable oxidising compounds are peroxides, such as hydrogen peroxide; iodates; and persulfates such as sodium, potassium or ammonium persulfates. It is preferred that hydrogen peroxide is used as an oxidising agent and that is used at a concentration of between 22.5% and 30%.

It is obvious that the qualitative improvement of the iodophor obtainable by this process, offers the additional advantage of cost savings by using only one fourth of the amount of PVP used in prior art processes.

In another broad form this invention provides a method for the antiseptic and disinfecting treatment of organic and inert surfaces requiring such treatment, which method comprises treating said object with an effective amount of the composition described above, for a period of time sufficient to effect desired asepsis.

### BRIEF DESCRIPTION OF DRAWING

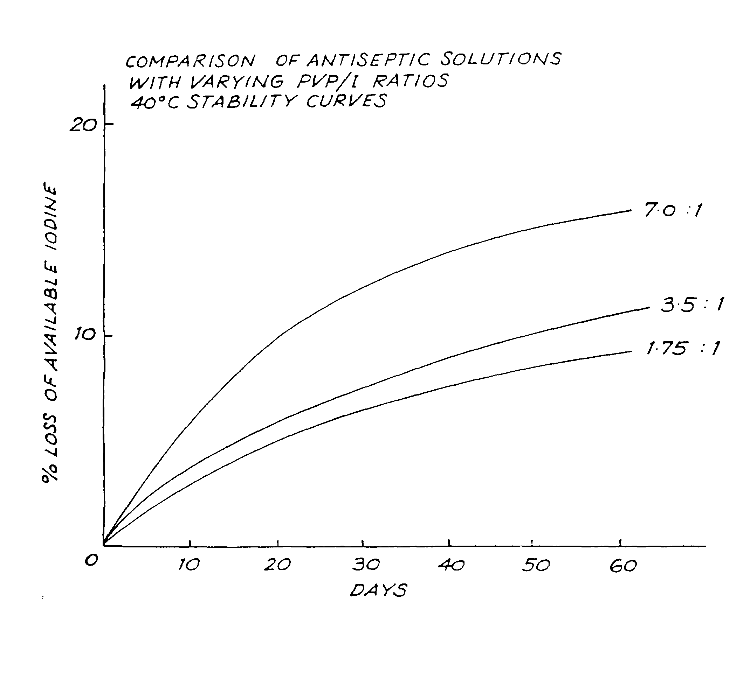

The drawing shows loss of available iodine in aqueous solutions containing the povidone iodine concentrates at various povidone to iodine ratios.

### BEST MODES FOR CARRYING OUT THE INVENTION

The following examples illustrate preferred embodiments of the invention and should not be construed as limiting thereon.

### EXAMPLE 1

### PVP:I ratio 1.75:1

### ANTISEPTIC OINTMENT (5% w/v IODINE)

A mixture of 72.5 gm of polyethyleneglycol 400 and 17.5 gm polyethyleneglycol 4000 is heated to approximately 45 to 50 degrees C with stirring. Heating is continued until a clear even liquid is obtained. Then 10 gm with a PVP:I ratio of 1.75:1 and an available iodine content of 5%, is slowly stirred in. Stirring is continued until an even product is obtained and then allowed to cool. An even smooth easily applied to the skin antiseptic is obtained.

### EXAMPLE 2

### PVP:I ratio 5:1

### ANTISEPTIC SOLUTION (1% w/v AV. IODINE)

50g Polyvinylpyrrolidone K30 and 22g of potassium iodide was dissolved in 200ml of water. Phosphoric acid (7ml, 85%), was added with slow stirring followed by 6ml of 27.5% hydrogen peroxide. The solution was allowed to stand for at least 12 hours and the pH adjusted with either phosphoric acid or sodium hydroxide to approx. 4.5. Sufficient water, approx. 800ml, was added to give a final available iodine content of 1%w/v.

### EXAMPLE 3

### PVP:I ratio 3:1

### TEAT DIP FOR MASTITIS CONTROL (0.5% w/v AV. IODINE)

15g of PVP K30, 50g of glycerol and 11g of potassium iodide was dissolved in 200ml of water. Phosphoric acid (3.5ml, 85%), was then added with slow stirring, followed by 3ml of 27.5% hydrogen peroxide. The solution was allowed to stand for at least 12 hours and the pH adjusted to approximately 4.5 with either phosphoric acid or sodium hydroxide. Sufficient water, approximately 800ml, was added to give a final available iodine content of 0.5% w/v.

### EXAMPLE 4

### PVP:I ratio 3:1

### POVIDONE IODINE CONCENTRATE

150g of PVP K30 and 110g of potassium iodide was dissolved in 500ml of water. 35ml of 85% Phosphoric acid was then added with slow stirring followed by 30ml of 27.5% hydrogen peroxide. The solution was allowed to stand for at least 12 hours and the pH adjusted to approx. 4.5 with either phosphoric acid or sodium hydroxide. Sufficient water, approx. 175ml, was added to give a final available iodine content of 5.0%w/v.

The concentrate can be used as starting material for the manufacture of various antiseptic and disinfecting products for various applications and concentrations.

### COMPARATIVE EXAMPLE 1

### EFFECT OF OXIDIZERS ON PVP-I STABILITY

Table I shows the effect of added oxidizers in excess of theoretical quantity necessary to liberate all iodine from the iodine liberating substance on the stability of an aqueous PVP-I solution containing 1% available iodine. For all batches a PVP-I ratio of 7:1 was employed and all samples were stored at accelerated testing conditions of 55°C. The test solutions were stored in stoppered clear dark brown glass bottles. Aliquots were sampled at the intervals shown in the table and the concentration of iodine determined using the thiosulphate method.

**TABLE 1:**

| % AVAILABLE IODINE LOSS AT 55°C | | | |
|---|---|---|---|
| OXIDIZER | 5 DAYS | 7 DAYS | 14 DAYS |
| Control | 17.0 % | 27.4 % | 39.6 % |
| Hydrogen peroxide ) | 22.8 % | 36.2 % | 54.3 % |
| Sodium persulfate ) | 55.2 % | 69.5 % | 98.1 % |
| Potassium iodate ) | 84.9 % | 93.7 % | 100 % |

### COMPARATIVE EXAMPLE 2

### EFFECT OF INCREASING RATIO OF PVP:I ON STABILITY

Table 2 shows the effect of increasing the ratio of PVP:I. For all batches hydrogen peroxide was employed as the oxidising agent leaving an excess iodide in the product. All samples were stored at accelerated testing conditions of 55°C.

**TABLE 2:**

| % AVAILABLE IODINE LOSS AT 55°C | | | | |
|---|---|---|---|---|
| PVP:I | INITIAL | 1 DAY | 7 DAYS | 14 DAYS |
| 1.75:1 | 0.0 | 4.0 | 12.3 | 22.1 |
| 3.50:1 | 0.0 | 8.0 | 24.1 | 41.1 |
| 5.00:1 | 0.0 | 7.8 | 29.6 | 44.3 |
| 7.00:1 | 0.0 | 8.6 | 36.2 | 54.3 |

### COMPARATIVE EXAMPLE 3

The results of these tests show that the ratio of the complexing substance to iodine has no influence on the microbiocidal effectiveness of the iodine complex, provided the available iodine remains the same. Comparison of antimicrobial activity of PVP-I complex of a high and low PVP:I ratio was carried out by the Minimum Inhibitory Concentration (M.I.C.) method

**TABLE 3:**

| TEST ORGANISMS | Culture Count (cfu/ml) |
|---|---|
| Escherichia coli | 6.4 x 10⁹ |
| Staphylococcus aureus | 6.3 x 10⁹ |
| Pseudomonas aeruginosa | 3.0 x 10⁹ |
| Proteus vulgaris | 6.0 x 10⁹ |

20 µ of the above cultures was inoculated into the test solution. The test solutions were prepared by making doubling serial dilutions using Difco AOAC medium.

**TABLE 4:**

| RESULT: | | | | |
|---|---|---|---|---|
| PVP:I= 7:1 | Dilution | | | |
| Culture | 1/25 | 1/50 | 1/100 | 1/200 |
| E. coli | - | - | - | + |
| S. aureus | - | - | - | - |
| Ps. aeruginosa | - | - | - | + |
| P. vulgaris | - | - | - | + |
| Controls satisfactory. | | | | |
| PVP:I= 1.75:1 | | | | |
| E. coli | - | - | - | + |
| S. aureus | - | - | - | - |
| Ps. aeruginosa | - | - | - | + |
| P. vulgaris | - | - | - | + |
| Controls satisfactory. | | | | |

The foregoing describes only some embodiments of the present invention and modifications, obvious to those skilled in the art, can be made thereto without departing from the scope of the present invention.

## Claims

1. An organic iodophor composition of improved stability in aqueous solution comprising a polyvinylpyrrolidone:iodine (PVP:I) complex as an iodophor and hydroiodic acid or an alkali metal iodide; wherein the ratio of PVP to iodine is from 1.75:1 to 3:1 by weight; and wherein the complex obtainable by oxidising the iodide in the presence of PVP has a pH value of less than 7; and wherein the hydroiodic acid or alkali metal iodide is present in an amount of between 10 and 60% by weight of the PVP:I iodophor complex.

2. The composition as claimed in claim 1, wherein the alkali metal iodide is potassium iodide.

3. A method for the antiseptic and disinfecting treatment of inert surfaces requiring such treatment, which method comprises treating said surface with an effective amount of a composition as claimed in claim 1 or claim 2, for a period of time sufficient to effect desired asepsis.

4. A method of cleansing an organic surface, which method comprises treating said surface with an effective amount of a composition as claimed in claim 1 or claim 2.

## Patentansprüche

1. Organische Iodophor-Zusammensetzung mit verbesserter Stabilität in wässriger Lösung enthaltend ein Polyvinylpyrrolidon-Iod (PVP:I)-Komplex als ein Iodophor und Iodwasserstoffsäure oder ein Alkalimetalliodid, wobei das Verhältnis von PVP zu Iod zwischen 1.75:1 bis 3:1 bezogen auf das Gewicht beträgt und wobei der durch Oxidation des Iodids in der Anwesenheit von PVP erhältliche Komplex einen pH-Wert von < 7 aufweist und wobei die Iodwasserstoffsäure oder das Alkalimetalliodid in einem Gehalt von zwischen 10 und 60 Gewichtsprozent bezogen auf den PVP:I-Iodophor-Komplex anwesend ist.

2. Zusammensetzung nach Anspruch 1, **dadurch gekennzeichnet**, dass das Alkalimetalliodid Kaliumiodid ist.

3. Verfahren für die antiseptische und desinfizierende Behandlung von inerten Oberflächen, die eine derartige Behandlung erfordern, **dadurch gekennzeichnet**, dass das Verfahren die Behandlung der Oberfläche mit einer wirksamen Menge einer Zusammensetzung nach Anspruch 1 oder 2 für einen Zeitraum umfasst, der ausreichend ist, die gewünschte Asepsis zu bewirken.

4. Verfahren zum Reinigen einer organischen Oberfläche, **dadurch gekennzeichnet**, dass das Verfahren die Behandlung der Oberfläche mit einer wirksamen Menge einer Zusammensetzung nach einem der Ansprüche 1 oder 2 umfasst.

## Revendications

1. Composition à base d'iodophore organique ayant une stabilité améliorée en solution aqueuse comprenant un complexe polyvinylpyrrolidone : iode (PVP : I) en tant qu'iodophore et de l'acide iodhydrique ou un iodure de métal alcalin ; dans laquelle le rapport de la PVP à l'iode est de 1,75 : 1 à 3 : 1 en masse ; et dans laquelle le complexe pouvant être obtenu par oxydation de l'iodure en présence de PVP a un pH d'une valeur inférieure à 7 : et dans laquelle l'acide iodhydrique ou l'iodure de métal alcalin est présent en une quantité située entre 10 % et 60 % en masse par rapport au complexe iodophore PVP : I.

2. Composition selon la revendication 1, dans laquelle l'iodure de métal alcalin est l'iodure de potassium.

3. Méthode pour le traitement antiseptique et désinfectant de surfaces inertes exigeant un tel traitement, cette méthode comprenant le traitement de ladite surface avec une quantité efficace d'une composition selon la revendication 1 ou la revendication 2, pendant une durée suffisante pour réaliser l'asepsie désirée.

4. Méthode de nettoyage d'une surface organique, cette méthode comprenant le traitement de ladite surface par une quantité efficace d'une composition selon la revendication 1 ou la revendication 2.
